# EUROPEAN PATENT APPLICATION

(11) **EP 2 546 690 A1**
(43) Date of publication of application: **16.01.2013**
(21) Application number: 11753344.8
(22) Date of filing: 08.03.2011
(51) Int. Cl.: G02B 7/04

(54) **DRIVING MECHANISM, DRIVING DEVICE, AND METHOD OF MANUFACTURING DRIVING DEVICE**

(30) Priority: 10.03.2010 JP 2010052738
(71) Applicant: Konica Minolta Advanced Layers, Inc., Hachioji-shi Tokyo 192-8505 (JP)
(72) Inventor: NODA Atsuhiro, Hino-Shi Tokyo 191-8511 (JP); WADA Shigeru, Hino-Shi Tokyo 191-8511 (JP)
(74) Representative: HOFFMANN EITLE
(86) International application number: PCT/JP2011/055322
(87) International publication number: WO 2011/111686

(57) **Abstract**

Disclosed are a driving mechanism and a driving device to which durable shape memory alloy (SMA) is applied and that can operate normally even in a high temperature environment. Also disclosed is a method of manufacturing such a driving device. In the driving mechanism, the driving device, and the method of manufacturing the driving device, building tension of the SMA is adjusted in advance so as to balance with bias force during supplying of a predetermined amount of electricity to the SMA after all members are integrated together.

## Description

### Technical Field

The present invention relates to a driving mechanism that drives a compact machine element by using a shape memory alloy and a driving device provided with such a driving mechanism, and specifically relates to a driving mechanism that is preferable for moving a lens unit in an imaging optical system for camera-equipped mobile phones and the like in an optical axis direction for zoom control, focus control, or the like, a driving device provided with such a driving mechanism, and a method of manufacturing such a driving device.

### Background Art

In recent years, quality of images obtained by an image sensor has been tremendously improved by, for example, increase in the number of pixels in an image sensor incorporated in a camera-equipped mobile phone or a like apparatus. Such improvement of image quality has given rise to a demand for provision of advanced functions such as a focus function and a zoom function, in addition to a basic function, that is, an image-shooting function.

A lens driving device for moving a lens in an optical axis direction is necessary to give these additional functions to the camera-equipped mobile phone, and various researches have been conducted recently on application of a lens driving device using a shape memory alloy (hereinafter an SMA). Such a lens driving device is configured such that a contractile force is generated by energizing and heating an SMA, for example, and the thus generated contractile force is utilized to drive a lens. The SMA-actuated lens driving device is advantageous in that it is easily made compact and lightweight, and that a driving force of a relatively large magnitude can be obtained.

Furthermore, an SMA wire makes it possible to construct a linear driving device that utilizes change in the length of the SMA wire by several percent (for example 3 to 5 %). Moreover, by combining the SMA wire with a variable magnification mechanism (for example, a lever mechanism), it is possible to construct a linear driving device having an increased displacement amount.

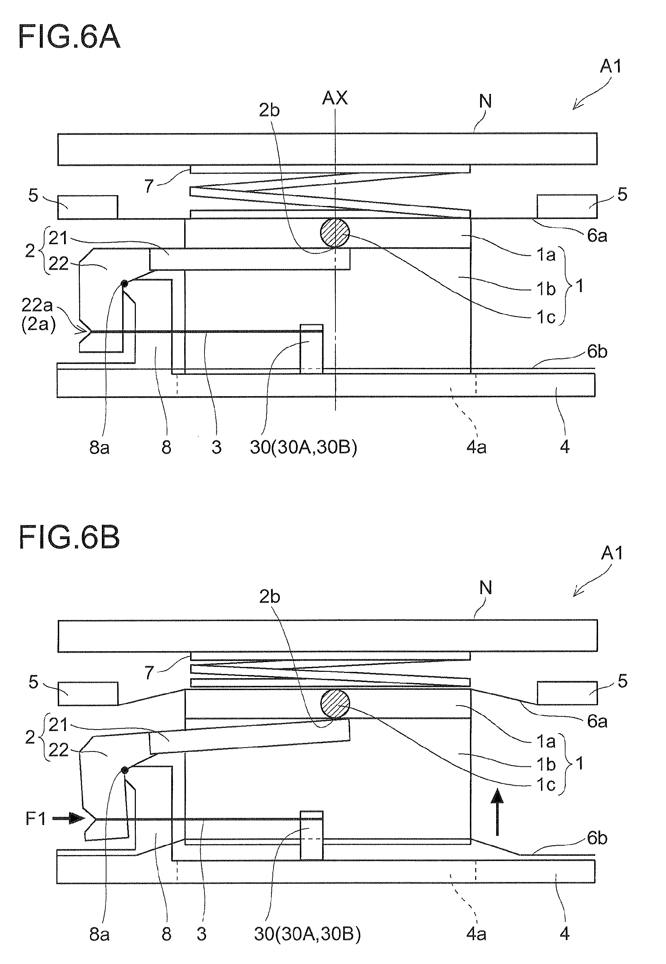

Known examples of the SMA-actuated lens driving mechanism and the driving device provided with the lens driving mechanism are those disclosed, for example, in Patent Literature 1. A driving device A1 is provided with a wire SMA and a lever mechanism that magnifies the displacement amount, and has a configuration as illustrated in FIGS. 6A and 6B.

The driving device A1 is a lens driving device that displaces a lens unit 1, which is a target to be driven, by using a wire SMA and a lever mechanism that increases the displacement amount, and the driving device A1 has a configuration including components such as a lever member 2 which moves the lens unit 1 in an optical axis AX direction (an axis-line direction), an SMA actuator 3, a base member 4, a top panel 5, parallel plate springs 6a and 6b, and a bias spring 7.

The base member 4 is fixed to a member (for example, an image sensor substrate or the like of a mobile phone) to which the lens driving device is to be fitted, and the base member 4 is a stationary member that forms, for example, the base of the lens driving device. The base member 4 has a shape of a quadrangle plate in plan view, and is entirely made of a resin material or the like.

The lens unit 1 has a cylindrical shape and includes a lens driving frame 1a for holding an imaging lens and a lens barrel 1b in which the lens driving frame 1a is housed. The imaging lens which is held inside the lens driving frame 1a includes an objective lens, a focus lens, and a zoom lens, for example, the imaging lens constituting an imaging optical system for an unillustrated image sensor. The lens driving frame 1a is what is called a lens frame, and moves in the optical axis AX direction together with the lens barrel 1b. At an outer circumferential portion of the lens driving frame 1a at an end thereof on the object side, a pair of engagement projections 1c are provided at an angular difference of 180 degrees therebetween in the circumferential direction.

The lens unit 1 is disposed on the base member 4 in a state in which it is inserted in an opening portion provided in the top panel 5. The lens unit 1 is also disposed such that the pair of engagement projections 1c are located in the vicinity of a pair of opposite corners of the base member 4. To the base member 4 and the top panel 5, the parallel plate springs 6a and 6b are fixed, and to these plate springs 6a and 6b, the lens unit 1 is fixed. Thus, the lens unit 1 is displaceably supported with respect to the base member 4 or the like, and a degree of freedom of its displacement is restricted to a direction along the optical axis AX. The top panel 5, which may be fixed to the base member 4 via an unillustrated support rod or the like or may be integrally formed with the base member 4, is a fixed member like the base member.

The lever member 2 engages with the engagement projections 1c to move the lens unit 1 in the optical axis AX direction. For example, the lever member 2 has a driving arm 21 for moving the lens unit 1 as a driven target in an axis-line direction of the lens unit 1, a driving pivot 8a which swingably supports the driving arm 21, and an extension arm 22 which is bent with respect to the driving arm 21 at, and extends downward from, the driving pivot 8a, such that the lever member 2 has an inverted L-shape in side view. Furthermore, the bent portion of the L-shape is supported on a tip of a support leg 8, which is provided standing on the base member 4, via the driving pivot 8a.

The SMA actuator 3 is wound around the extension arm 22 by being fit in a V-shaped groove 22a of the extension arm 22, and the portion of the extension arm 22 around which the SMA actuator 3 is wound functions as a displacement input portion 2a. Portions of the driving arm 21 at which the driving arm 21 contacts the engagement projections 1c are a displacement output portion 2b. Thus, the lever member 2 is provided with the displacement input portion 2a around which the SMA actuator 3 is wound and which receives a driving force F1 and a displacement output portion 2b at which the driving arm 21 is in contact with the engagement projections 1c.

The SMA actuator 3 gives the driving force F1 to the lever member 2, and is, for example, a linear actuator formed as a wire of a shape memory alloy (an SMA wire) made of a shape memory alloy such as an Ni-Ti alloy. The SMA actuator 3 has the following feature. That is, it expands when a predetermined tension force is applied thereto in a low-temperature low-elastic-coefficient state (a martensite phase); and when it is heated in the expanded state, its phase is transformed such that it is shifted to a high-elastic-coefficient state (an austenite phase: a mother phase) and shrinks (returns from the expanded state to a state of its original length: recovers its initial shape).

Furthermore, when the SMA actuator 3 is energized, it heats itself by generating Joule heat, to shift from the martensite phase to the austenite phase. To energize the SMA actuator 3, both ends of the SMA actuator 3 are fixed to energizing holding portions 30 (for example, a first holding portion 30A and a second holding portion 30B), through which the SMA actuator 3 is able to be energized. The holding portions 30 (30A and 30B) are fixed to predetermined electrode fixing portions provided on the base member 4.

Moreover, bias force is applied via the bias spring 7 in the direction of reaction to the driving force of the SMA actuator 3 and the lever member 2. The bias force applied by the bias spring 7 is weaker than the driving force applied to the lever member 2 by the SMA actuator 3, and thus, when the SMA actuator 3 is not in operation, the lens unit 1 is pressed toward the base member 4 side. On the other hand, when the SMA actuator 3 operates, the lens unit 1 moves, against the bias force applied by the bias spring 7, in a direction opposite to the direction of the force (toward the object side). That is, the bias spring 7 gives a bias load to the lens unit 1 so that the lens unit 1 returns to its home position when the SMA actuator 3 is not energized.

A length of the SMA actuator 3 is set such that, when not operating, the SMA actuator 3 is tense with the bias force received from the bias spring 7 via the lens unit 1 and the lever member 2. That is, the length of the SMA actuator 3 is set such that the lever member 2 is always in contact with the lens unit 1 whether the SMA actuator 3 is operating or not. With this configuration, when the SMA actuator 3 is operating, its displacement is quickly transmitted to swing the lever member 2.

When the SMA actuator 3 is not energized to be heated, that is, when it is not operating (and is in an extended state), thanks to the bias force of the bias spring 7, the lens unit 1 is held at a home position (an origin position). On the other hand, when the SMA actuator 3 operates (contracts), this contracting operation causes the driving force F1 to be applied to the displacement input portion 2a of the lever member 2 to swing the lever member 2, and this swinging of the lever member 2 subsequently makes the displacement output portion 2b move in the optical axis AX direction. As a result, a driving force is applied to move the lens unit 1 toward the object side, and the lens unit 1 moves against the bias force of the bias spring 7. Here, it is possible to control the current supplied to the SMA actuator 3 to adjust the strength of the force in the driving direction, to thereby increase or decrease the driving force applied to swing the lever member 2 to adjust the displacement amount of the lens unit 1.

The bias spring 7 is formed as a compression coil spring having a diameter substantially equal to a circumference size of the lens driving frame 1a, and one end side (for example, a lower end side) of the bias spring 7 is in contact with the top surface of the lens driving frame 1a. The other end side (for example, an upper end side) of the bias spring 7 is in contact with a stationary portion N such as a casing inner surface of a mobile phone.

Thus, the conventional lens driving device has a configuration where a lens unit 1 is supported at a stationary portion to be displaceable in an optical axis AX direction by using parallel plate springs 6a and 6b, such that the lens unit 1 is displaced in the optical axis AX direction via a lever member 2 and an SMA actuator 3 against bias force of a bias spring 7 which biases the lens unit 1 in the optical axis AX direction.

### Citation List

### Patent Literature

Patent Literature 1: JP-A-2009-37059

### Summary of Invention

### Technical Problem

Apparatuses such as camera-equipped mobile phones have been made more compact year by year, so that an increasingly large number of components, especially electronic parts, are packaged in a small casing. Many of such electronic parts generate heat when energized, causing a rise in temperature in a compact apparatus.

Devices incorporated in such a compact apparatus, for example, imaging devices such as a lens driving device are required to perform a desired predetermined operation accurately in such a high temperature environment.

An SMA actuator incorporated in a driving device described in Patent Literature 1 is a thermal actuator which generates heat when energized and controls its operation by utilizing a phase change in an SMA caused by the thus generated heat. Thus, in a high temperature environment, whether energized or not, the SMA may be activated to operate by the high environment temperature, and the SMA actuator may become uncontrollable.

Normally, transformation temperature of an SMA is able to be raised by increasing the tension of the SMA, and the high transformation temperature allows the SMA to operate properly even in a high temperature environment. However, it is known that increased tension of an SMA remarkably reduces durability of the SMA. For example, it is known that the durability of an SMA sharply decreases when internal stress of the SMA exceeds 500 MPa, and that the SMA is broken when the internal stress reaches approximately 1000 MPa.

Thus, to use an SMA as an actuator, the SMA is preferably used in a stress range of 500 MPa or less, and the SMA is required to be able to operate stably even in a high temperature environment.

The present invention has been made in view of the foregoing, and an object of the present invention is to provide a driving mechanism using an SMA and a driving device provided with the driving mechanism, specifically, a driving mechanism where the SMA is durable and operates properly even in a high temperature environment, a driving device provided with the driving mechanism, and a method of manufacturing the driving device.

### Solution to Problem

To achieve the above object, according to one aspect of the present invention, a driving mechanism includes a stationary support member; a driven body which is supported to be movable relatively with respect to the support member; a shape memory alloy which generates a force for moving the driven body; and biasing means which applies a bias force to the driven body in a direction opposite to a direction in which the driven body is moved by the shape memory alloy. Here, an installation tension of the shape memory alloy is adjusted in advance such that the installation tension is in balance with the bias force when the shape memory alloy is energized with a predetermined amount of power.

With this configuration, after the driven body, the shape memory alloy, the biasing means, and the like are assembled together, the installation tension of the shape memory alloy is adjusted in advance to a tension that is in balance with a bias force that the biasing means actually exhibits when the shape memory alloy is energized with a predetermined amount of power, and this makes it possible to control the installation tension to be in a tension range where the shape memory alloy exhibits durability in a predetermined temperature range and operates properly even in an expected high temperature environment. This contributes to achieving a driving mechanism that is capable of stably moving the driven body by using a shape memory alloy.

According to another aspect of the present invention, a driving mechanism includes a stationary support member; a driven body which is supported to be movable relatively with respect to the support member; a shape memory alloy which generates a force for moving the driven body; a lever member which moves the driven body by receiving the force generated by the shape memory alloy; and biasing means which applies a bias force to the driven body in a direction opposite to a direction in which the driven body is moved by the shape memory alloy. Here, an installation tension of the shape memory alloy is adjusted in advance such that, when the shape memory alloy is energized with a predetermined amount of power, the installation tension is in balance with the bias force, the bias force being a predetermined bias force including driving resistance of the lever member.

With this configuration, after the driven body, the shape memory alloy, the lever member, the biasing means, and the like are assembled together, the installation tension of the shape memory alloy is adjusted in advance to a tension that is in balance with a predetermined bias force including driving resistance of the lever member when the shape memory alloy is energized with a predetermined amount of power, and this makes it possible to control the installation tension to be in a tension range where the shape memory alloy exhibits durability in a predetermined temperature range and operates properly even in an expected high temperature environment. This contributes to achieving a driving mechanism that is capable of stably moving the driven body by using a shape memory alloy and a lever member.

According to one embodiment of the present invention, in the driving mechanism having the above configuration, preferably, the installation tension is a tension under which the driven body does not move until a predetermined temperature which is set in advance is reached. With this configuration, a high ambient temperature does not trigger an operation, and a desired predetermined operation is able to be performed accurately.

According to one embodiment of the present invention, in the driving mechanism having the above configuration, the predetermined temperature is preferably in a range from 60°C to 80°C. This configuration may be preferable in a case where a large number of electronic parts are packaged in a small casing. In such a case, when the electronic parts are energized, they generate heat and the thus generated heat raises temperature inside the casing, which may cause a shape memory alloy to operate unexpectedly when the shape memory alloy itself is not energized. However, with this configuration, since the shape memory alloy does not operate unexpectedly until temperature therein reaches a temperature in the range from 60°C to 80°C, it is possible to reduce malfunctioning of the shape memory alloy occurring when the shape memory alloy is not energized.

According to one embodiment of the present invention, preferably, the driving mechanism having the above-described configuration further includes installation tension adjusting means which adjusts the installation tension of the shape memory alloy. This configuration makes it possible to adjust the installation tension of the shape memory alloy via the installation tension adjusting means after all the components are assembled together, making it possible to set the installation tension to a suitable tension concerning manufacturing and mounting errors of various components without using an external device. As a result, it is possible to achieve a driving mechanism using a shape memory alloy that exhibits durability and operates properly even in a high temperature environment.

According to one embodiment of the present invention, in the driving mechanism having the above-described configuration, the driven body is preferably a lens unit and moves in a direction of an optical axis of the lens unit, and the shape memory alloy is preferably a shape memory alloy wire. With this configuration, it is possible to achieve a driving mechanism that uses a shape memory alloy wire to move a lens unit, the shape memory alloy wire being durable and capable of operating properly even in a high temperature environment, and that is capable of moving the lens unit stably.

According to another aspect of the present invention, a driving device includes a lens unit as a driven body, and the driving mechanism having the above configuration as a driving mechanism for moving the lens unit in a direction of an optical axis of the lens unit. With this configuration, it is possible to achieve a driving mechanism that uses a shape memory alloy to move a lens unit, the shape memory alloy being durable and capable of operating properly even in a high temperature environment, and that is capable of moving the lens unit stably.

According to another aspect of the present invention, a driving device includes a stationary portion provided with a base member having a through hole; a driven body which is supported, via a support member which is attached to the base member, to be able to reciprocate inside the through hole in a direction of an axis line of the through hole; a shape memory alloy wire which applies to the driven body a driving force for moving the driven body; a lever member around which the shape memory alloy wire is wound and which moves the driven body by receiving the driving force from the shape memory alloy wire; and biasing means which applies a bias force to the driven body in a direction opposite to a direction in which the driven body is moved by the shape memory alloy wire. Here, both ends of the shape memory alloy wire are respectively held by energizing holding portions through which the shape memory alloy wire is able to be energized, a predetermined installation tension being applied to the shape memory alloy wire; and the installation tension is adjusted in advance such that the installation tension is in balance with driving resistance of the lever member and a bias force that the biasing means exhibits when the shape memory alloy wire is energized with a predetermined amount of power.

With this configuration, after the driven body, the shape memory alloy wire, the lever member, the biasing means, and the like are assembled together, the installation tension of the shape memory alloy wire is adjusted in advance to a tension that is in balance with a predetermined bias force including driving resistance of the lever member when the shape memory alloy wire is energized with a predetermined amount of power, and this makes it possible to control the installation tension to be in a tension range where the shape memory alloy wire exhibits durability in a predetermined temperature range and properly operates even in an expected high temperature environment. Thus, it is possible to obtain a driving device that is capable of stably moving the driven body by using a shape memory alloy wire and a lever member.

According to another aspect of the present invention, in a method of manufacturing a driving device that includes a stationary support member, a driven body which is supported to be movable relatively with respect to the support member, a shape memory alloy which generates a force for moving the driven body, and biasing means which applies a bias force to the driven body in a direction opposite to a direction in which the driven body is moved by the shape memory alloy, after the support member, the driven body, the shape memory alloy, and the biasing means are assembled together, an installation tension of the shape memory alloy is adjusted such that the installation tension is in balance with the bias force when the shape memory alloy is energized with a predetermined amount of power.

With this configuration, after the driven body, the shape memory alloy, the biasing means, and the like are assembled together, the shape memory alloy is energized with a predetermined amount of power, and the installation tension of the shape memory alloy is adjusted such that the installation tension is in balance with the bias force that the biasing means actually exhibits in this state, and this makes it possible to control the installation tension to be in a tension range where the shape memory alloy exhibits durability in a predetermined temperature range and properly operates even in an expected high temperature environment. This ensures manufacturing of a driving device that is capable of stably moving a driven body by using a shape memory alloy.

According to another aspect of the present invention, in a method of manufacturing a driving device including a stationary support member, a driven body which is supported to be movable relatively with respect to the support member, a shape memory alloy which generates a force for moving the driven body, and biasing means which applies a bias force to the driven body in a direction opposite to a direction in which the driven body is moved by the shape memory alloy, after the support member, the driven body, the shape memory alloy, and the biasing means are assembled together, a load and a displacement amount in moving the driven body against the biasing means to a predetermined position are measured, the bias force that the biasing means exhibits is detected from a relationship between the load and the displacement amount which are measured, and installation tension of the shape memory alloy is adjusted to a predetermined tension according to a detection result of the bias force.

With this configuration, after the driven body, the shape memory alloy, the biasing means and the like are assembled together, bias force that the biasing means actually exhibits is detected, and then the installation tension of the shape memory alloy is adjusted according to the result of this detection. Thus, it is possible to control the installation tension of the shape memory alloy to be in a tension range where a shape memory alloy exhibits durability and operates properly even in an expected high temperature environment. This ensures manufacturing of a driving device that is capable of stably moving a driven body by using a shape memory alloy.

According to one embodiment of the present invention, in the method of manufacturing a driving device having the above-described configuration, preferably, the shape memory alloy is a shape memory alloy wire, and the shape memory alloy wire is fixed after the installation tension is adjusted to the predetermined installation tension with the shape memory alloy wire energized via an energizing first holding portion and an energizing second holding portion by which two ends of the shape memory alloy wire are respectively held. With this configuration, since the installation tension is adjusted with the temperature of the shape memory wire maintained at a predetermined temperature, it is possible to manufacture a driving device that is capable of properly operating according to expected ambient temperature.

According to one embodiment of the present invention, in the method of manufacturing a driving device having the above-described configuration, preferably, an amount of power with which the shape memory alloy wire is energized in adjusting the installation tension is an amount of power with which the shape memory alloy wire generates a tension that is equivalent to a tension that the shape memory alloy wire has when temperature of the shape memory alloy wire is a predetermined temperature. This configuration makes it possible to make the shape memory alloy wire operate in an expected temperature range, and facilitates manufacturing of a driving device that operates properly.

According to one embodiment of the present invention, in the method of manufacturing a driving device having the above-described configuration, preferably, the shape memory alloy wire is fixed after the installation tension is adjusted to the predetermined installation tension by moving the second holding portion in a state in which a first end of the shape memory alloy wire is fixed to the first holding portion, a second end of the shape memory alloy wire is held by the second holding portion, and the shape memory alloy wire is energized. With this configuration, it is possible to finely adjust the installation tension while applying a predetermined current across the first and second holding portions. This facilitates manufacturing of a driving device that is capable of stably moving a driven body in an expected high temperature environment.

### Advantageous Effects of Invention

According to the present invention, it is possible to obtain a driving device to which an SMA is applied where the SMA has durability and capable of operating properly even in a high temperature environment, a driving device provided with the driving mechanism, and a method of manufacturing the driving device.

### Brief Description of Drawings

FIG. 1 is a schematic plan view of a driving device provided with a driving mechanism according to the present invention.
FIG. 2A is a schematic side view of a driving device provided with a driving mechanism according to the present invention, illustrating a state in which a driven body is at an initial stopping position.
FIG. 2B is a schematic side view of a driving device provided with a driving mechanism according to the present invention, illustrating a state after a driven body is moved upward via a loadcell.
FIG. 3 is a diagram illustrating data of measured load.
FIG. 4 is a schematic plan view illustrating an example of a driving device provided with an installation tension adjusting and holding portion as installation tension adjusting means according to the present invention.
FIG. 5 is a schematic side view illustrating an example of a driving device provided with initial stopping position controlling means as installation tension adjusting means according to the present invention.
FIG. 6A is a schematic side view of a conventional lens driving device, illustrating a state before an SMA actuator operates.
FIG. 6B is a schematic side view of the conventional lens driving device, illustrating a state after the SMA actuator operates.

### Description of Embodiments

Hereinafter, embodiments of the present invention will be described with reference to the accompanying drawings. The same components will be identified by common reference symbols, and detailed description of them will be omitted if possible. For example, the above-mentioned lens unit 1, which is a driven body, will be referred to as a "driven body 1" in descriptions of the driving mechanism. Besides, the SMA actuator using a shape memory alloy and the SMA wire are equivalent components, and thus will be denoted by the same symbol "3".

First, a description will be given of a driving mechanism according to the present invention.

The driving mechanism according to the present invention is provided with a stationary support member, a driven body which is supported to be movable relatively with respect to the support member, a shape memory alloy which generates a force for moving the driven body, and biasing means which applies a bias force to the driven body in a direction opposite to a direction in which the driven body is caused to move by the shape memory alloy. The installation tension of the shape memory alloy under which the shape memory alloy is installed is adjusted in advance such that the installation tension is in balance with the bias force when the shape memory alloy is energized with a predetermined amount of power. That is, after all the components are assembled together, the installation tension is adjusted to such a tension that is in balance with the bias force exhibited by the biasing means upon energization with the predetermined amount of power.

In a case of a configuration further including a lever member which receives the force from the shape memory alloy to move the driven body, the installation tension of the shape memory alloy is adjusted in advance such that the installation tension is in balance with a predetermined bias force including driving resistance of the lever member upon energization of the shape memory alloy with the predetermined amount of power. That is, after all the components including the lever member are assembled together, the shape memory alloy is energized with the predetermined amount of power, and the installation tension of the shape memory alloy is adjusted in advance to such a tension that is in balance with an actually exhibited bias force.

With the above-configured driving mechanism where, after the driven body, the shape memory alloy, the biasing means, and the like are assembled together, the installation tension of the shape memory alloy is adjusted to a tension that is in balance with a bias force that the biasing means actually exhibits upon energization with the predetermined amount of power, it is possible to control the installation tension to be in a tension range where the shape memory alloy exhibits durability in a predetermined temperature range and operates properly even in an expected high temperature environment. This contributes to achieving a driving mechanism that is capable of stably moving the driven body by using a shape memory alloy.

The installation tension of the shape memory alloy may also be adjusted in advance in the following manner to a tension that is in balance with a bias force that the biasing means actually exhibits. After all the components are assembled together, a load and a displacement amount in moving the driven body against the biasing means to a predetermined position are measured, a bias force that the biasing means exhibits is detected from a relationship between the measured load and the measured displacement amount, and the installation tension of the shape memory alloy is adjusted to a predetermined tension according to the detection result of the bias force.

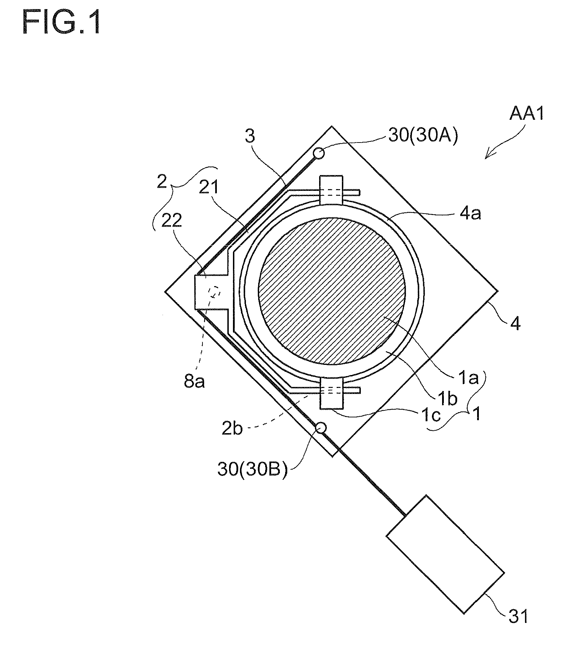

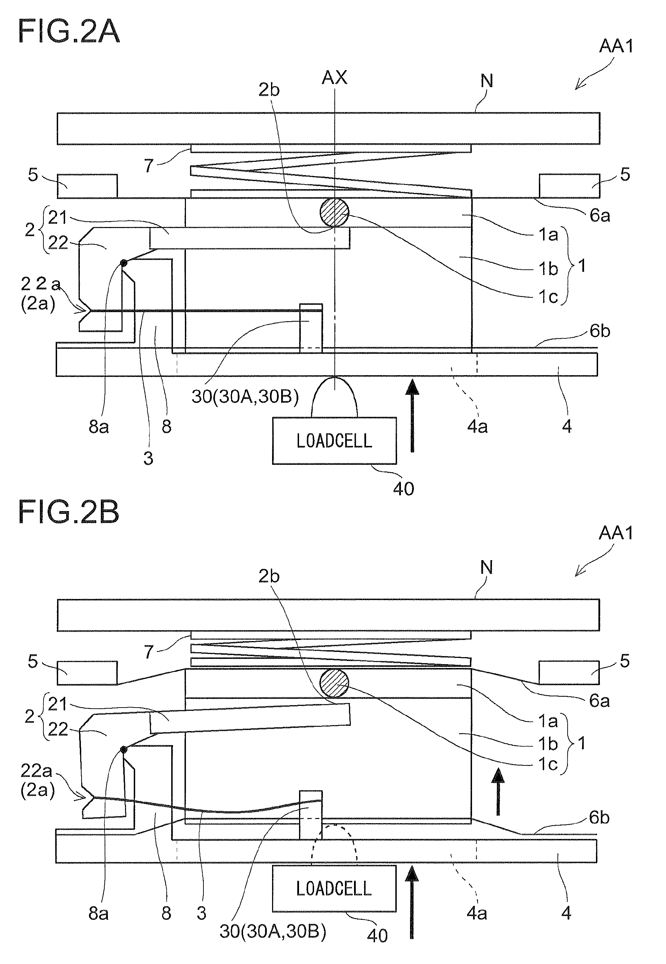

Next, with reference to FIGS. 1, 2A, and 2B, a description will be given of a driving device AA1 which is provided with the above-described driving mechanism. Here, such components that find their counterparts in the above-described driving device A1 will be denoted with the same symbols. The driving device AA1 of the present embodiment is a driving device that moves a driven body 1 (for example, a lens unit which is provided with a lens driving frame 1a and a lens barrel 1b) in an axis-line direction thereof (for example, an optical axis AX direction). The driving device AA1 is provided with a support member which supports the driven body 1 to be movable in the optical axis AX direction, a shape memory alloy (an SMA actuator 3) which generates a force for moving the driven body 1, and a biasing means (a bias spring 7) which applies a bias force to the driven body 1 in a direction opposite to a direction in which the driven body 1 is moved by the shape memory alloy.

The driving device AA1 is also provided with a pair of parallel plate springs 6a and 6b as a support member which elastically supports the driven body 1 to a stationary portion (a base member 4). The parallel plate springs 6a and 6b are fixed to the base member 4 and a top panel 5, respectively, and the driven body 1 is displaceably supported by the pair of upper and lower parallel plate springs 6a and 6b. The top panel 5 and the parallel plate springs 6a and 6b are omitted in FIG. 1 for convenience sake. Furthermore, for the purpose of moving the driven body 1 by magnifying the displacement caused by the shape memory alloy, there may be provided a lever member 2 which receives a driving force from the shape memory alloy (the SMA actuator 3) to move the driven body 1 therewith.

The lever member 2, for example, has a driving arm 21 which moves the driven body 1 in its axis-line direction, a driving pivot 8a which swingably supports the driving arm 21, and an extension arm 22 which is bent with respect to the driving arm 21 at the driving pivot 8a and extends downward from the driving pivot 8a, such that the lever member 2 has an inverted L-shape in side view. Furthermore, the bent portion of the L-shape is supported on a tip of a support leg 8, which is provided standing on the base member 4, via the driving pivot 8a. The lever member is further provided with a displacement input portion 2a around which the shape memory alloy is wound and which receives the driving force, and displacement output portions 2b which are engaged with engagement projections 1c provided on an outer perimeter portion of the driven body 1 and apply a driving force to the driven body 1.

The shape memory alloy (the SMA actuator 3) is wound around the displacement input portion 2a such that an intermediate portion thereof is in contact with the displacement input portion 2a, and both ends of the shape memory alloy are held by energizing holding portions 30 (a first holding portion 30A and a second holding portion 30B) through which the shape memory alloy is able to be energized. The holding portions 30 are the same distance away from the displacement input portion 2a, such that the two portions of the shape memory alloy on both sides of the displacement input portion 2a extend/contract by the same amount. Furthermore, a V-shaped groove 22a (which corresponds to the displacement input portion 2a) is formed in the extension arm 22, and the shape memory alloy is installed by being fitted in the V-shaped groove 22a, and thereby the shape memory alloy is stably wound around the lever member 2. In such a configuration, a predetermined amount of current is supplied to the shape memory alloy via the first holding portion 30A and the second holding portion 30B to cause the shape memory alloy generate a contracting force, with which the lever member 2 is driven to move.

When the shape memory alloy is contracted to drive the lever member 2, the displacement output portions 2b apply the engagement projections 1c a driving force to move the driven body 1 in the optical axis AX direction. Furthermore, a bias force is applied via the bias spring 7 to the driven body against the driving force. Such application of the bias force by the bias spring 7 to the driven body 1 in a direction opposite to the direction in which the driven body 1 is driven to move by the lever member 2 allows the driving mechanism and the driving device to move the driven body 1 stably by using the shape memory alloy (the SMA actuator 3).

The base member 4, which is a stationary portion, may have a circular shape or a polygon shape in plan view; however, in a case where the driving device is a lens driving device housed in a rectangular imaging device, the base member 4 is preferably quadrangular in plan view, such that a circular-contoured lens unit formed with a plurality of circular lenses is supported to be able to reciprocate in a circular through hole formed in a center portion of the base member 4, with associated members attached to corner portions along the sides of the base member 4.

For example, the base member 4 may be quadrangular in plan view and have a through hole 4a, the driving pivot 8a of the lever member 2 may be formed at one corner of the base member 4, with the holding portions 30 (the first holding portion 30A and the second holding portion 30B), which holds the SMA actuator 3 in an energizable state, provided at a second corner and a third corner which are each adjacent to the above one corner with an axis line therebetween, and the SMA actuator 3 may be wound around the displacement input portion 2a to form a "<" shape outside an outer side of the driven body 1.

In this case, the driving arm 21 of the lever member 2 may be, for example, as illustrated in FIG. 1, bent at a plurality of positions thereof along the outer perimeter portion of the driven body 1 (the lens unit). Alternatively, the driving arm 21 may be formed in an arc shape along the outer perimeter portion of the driven body 1, or may be formed in any shape as long as it is able to engage with the pair of engagement projections 1c provided on the outer perimeter portion of the lens driving frame 1a.

The base member 4 is fixed to a member (for example, an image sensor substrate for a mobile phone) where the driving mechanism is adopted, and the base member 4 is a stationary member that forms, for example, a base of a lens driving device. The base member 4 is entirely made of, for example, a resin material.

Mechanical errors including manufacturing errors and assembly errors of the above-described bias spring 7 and the lever member 2 may affect the operation of the SMA actuator 3 installed in the driving device. For example, if the bias spring 7 and the lever member 2 are too flexible in motion, it makes it so easy for the SMA actuator 3, which is expected to exhibit a predetermined driving force in a predetermined temperature range, to move the driven body 1 that the driven body 1 is moved by an unexpectedly large amount, and thus an unintended displacement may be triggered by a rise in the environment temperature. If, in contrast, the bias spring 7 and the lever member 2 are too inflexible in motion, the driven body 1 is moved only by a smaller amount, and thus the SMA actuator 3 is required to exhibit a larger driving force to surely move the driven body 1 by a desired displacement amount, which may result in an increased internal stress.

Thus, even if the SMA actuator 3 is designed to be operable in a high temperature environment, when the SMA actuator 3 is actually installed as a device, its internal stress may increase to reduce its durability, or, even if its durability is not reduced, the SMA actuator 3 may be unable to operate in a high temperature environment.

As already mentioned above, to use a shape memory alloy (an SMA) as an actuator, it is necessary to use it in a stress range of 500 MPa or less, and further, the SMA is required to be able to operate stably even in a high temperature environment. Thus, it is preferable to readjust the tension of the SMA actuator 3 to a suitable tension with respect to each individual driving mechanism and each individual driving device provided with the SMA actuator 3. Furthermore, it is preferable to energize the SMA with a predetermined amount of power after all the components are assembled together, to adjust the installation tension such that the installation tension is in balance with the bias force that is actually exhibited at this time.

Thus, in the present embodiment, in assembling a driving mechanism to which a shape memory alloy is adopted and a driving device provided with such a driving mechanism, it is possible to adjust the installation tension of the shape memory alloy by using a tension adjuster 31 as illustrated in FIG. 1 such that the installation tension is set to a suitable installation tension that is set according to how the bias spring 7 and the lever member 2 actually operate when they are mounted.

In order to appropriately set the installation tension of the shape memory alloy, it is necessary to first fix the shape memory alloy (the SMA actuator 3) temporarily at a predetermined initial tension and assemble various components of the driving mechanism or the driving device together, and then to detect an actual bias force in this state and adjust the installation tension of the shape memory alloy according to the detected bias force.

Thus, in a case of a driving mechanism and a driving device provided with a driven body 1, a shape memory alloy (an SMA actuator 3), and biasing means, the installation tension of the shape memory alloy is adjusted such that the installation tension is in balance with the bias force when the shape memory alloy is energized with a predetermined amount of power after all the components are assembled together. For example, preferably, a load and a displacement amount are measured when the driven body 1, after it is assembled with the other components, is moved against the biasing means to a predetermined position, then the bias force exhibited by the biasing means is detected from the relationship between the detected load and the detected displacement amount (load data), and then the installation tension of the shape memory alloy is adjusted to a predetermined tension according to the detected bias force.

Furthermore, in a case of a driving mechanism and a driving device provided with a driven body 1, an SMA actuator 3, a lever member 2, and biasing means, preferably, a load and a displacement amount are measured when the driven body 1, after it is assembled with the other components, is moved against the biasing means to a predetermined position, then the bias force including driving resistance of the lever member 2 is detected from the relationship between the detected load and the detected displacement amount (load data), and then the installation tension of the SMA actuator 3 is adjusted to a predetermined tension according to the detected bias force.

With such a configuration, it is possible to adjust the installation tension such that the installation tension is in balance with the bias force when the shape memory alloy is energized with a predetermined amount of power in a state where it is assembled with the other components, and thus, it is possible to control the installation tension to be in a tension range where the SMA actuator 3 exhibits durability and operates properly even in a high temperature environment, regardless of mechanical errors including manufacturing errors and assembly errors; thus, it is possible to obtain a driving mechanism and a driving device capable of stably moving a driven body by using a shape memory alloy (the SMA actuator 3).

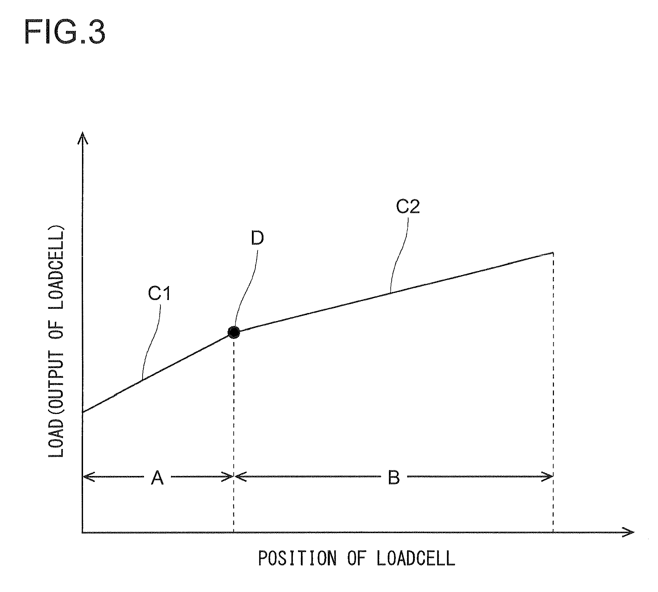

A loadcell may be used to obtain the load data by measuring the load and the displacement amount at a time when the driven body 1 assembled together with other components is moved to a predetermined position against the biasing means. This will now be described with reference to FIGS. 2A, 2B, and 3, dealing as an example a case where a loadcell is used to produce load data with respect to a driving device that is provided with a lens unit 1 as the driven body and an SMA wire 3 as the SMA actuator.

A driving device AA1 illustrated in FIG. 2A includes a base member 4, a lens unit 1 as the driven body, a lever member 2, a wire-like shape memory alloy (an SMA wire 3), and a bias spring 7, which are assembled together. The lever member 2 has a driving arm 21 which engages with engagement portions (engagement projections 1c) which are provided in the lens unit 1 to move the lens unit 1 in its axis-line (an optical axis AX) direction, a driving pivot 8a which swingably supports the driving arm 21, and an extension arm 22 which is bent with respect to the driving arm 21 at the driving pivot 8a and extends downward from the driving pivot 8a.

Furthermore, the driving pivot 8a and the displacement input portion 2a, around which the SMA wire 3 is wound and which receives a driving force, are provided at a corner portion of the base member 4, such that the SMA wire 3 is wound around the displacement input portion 2a to form a "<"-shape outside an outer side of the driven body 1. Here, the SMA wire 3 has a first end thereof firmly fixed and a second end thereof temporality fixed. For example, the first end is firmly fixed to the first holding portion 30A and the second end is temporarily fixed to the second holding portion 30B.

The second end may be temporarily fixed to the second holding portion 30B with an initial tension applied via the tension adjuster 31, for example. The initial tension is lower than a tension applied when the SMA wire 3 is energized. In this state, the lens unit 1 is lifted up in the figure, from a side of a through hole 4a provided in the base member 4, via a loadcell 40 the base member 4, and a load at this time is measured. Furthermore, load data is produced from a load and a displacement amount measured when the lens unit 1 is moved against the bias spring 7 to a predetermined position.

When the lens unit 1 is lifted up by the loadcell 40, the tension of the SMA wire 3 is gradually lowered, and the lens unit 1 reaches a position where the tension of the SMA wire 3 is 0. When the lens unit 1 continues to be lifted up higher from that position, the SMA wire 3 is gradually loosened, until it is in the state illustrated in FIG. 2B.

At this time, the bias spring 7 is in a compressed state where a heavy biasing load is applied downward from above in the figure. From the relationship between change in load and change in displacement amount observed when the loadcell 40 in contact with the lens unit 1 lifts up the lens unit 1, the load data as illustrated in FIG. 3 is produced to indicate the relationship between the load and the displacement amount.

In the load data, the axis of abscissas indicates the position of the loadcell, that is, the displacement amount of the driven body (the lens unit 1), while the axis of ordinates indicates the output of the loadcell, that is, the load.

As indicated in FIG. 3, the load data is composed of two sections, namely, section A where the slope is C1 and section B where the slope is C2. This means that a force that the initial tension of the SMA wire applies to the driven body via the lever member is lost in the course of the process. In other words, the tension of the SMA wire is gradually lowered by the driven body that is lifted up by the loadcell, until the tension is 0 at position D, and the lever member is out of contact with the driven body in section B. Section B, which is a latter section, indicates a sum of a force from the bias spring and a force from the parallel plate springs.

From the output data of the loadcell and the value of the initial tension of the SMA wire, it is possible to detect mechanical errors including a shape error of the lever member and a bias force error of the bias spring, the parallel plate springs, and the like. That is, the load data produced from the measurement makes it possible to simultaneously detect the driving resistance of the lever member and the bias force exhibited by the biasing means, to thereby detect mechanical errors of individual driving devices.

Furthermore, from the temperature of the measurement environment and the detected bias force, it is possible to calculate the initial tension of the SMA wire that allows the SMA wire to generate a predetermined driving force in an expected high temperature environment, that is, the installation tension at which the SMA wire 3 should actually be set. When an appropriate installation tension is calculated, a predetermined tension is applied to the SMA wire 3 by using the tension adjuster 31, and then the SMA wire 3 is fixed to the second holding portion 30B. Furthermore, after fixing the SMA wire 3 to the second holding portion 30B, an unnecessary part of the SMA wire is cut off and removed.

Thus, it is possible to adjust the installation tension of the SMA wire 3 such that the installation tension is in balance with the bias force when the shape memory alloy is energized with a predetermined amount of power in the following manner; that is, by first measuring the load and the displacement amount when the driven body assembled with the other components is moved against the biasing means to the predetermined position, then detecting the bias force including the driving resistance of the lever member from the relationship between the measured load and the measured displacement amount (the load data), and then adjusting the installation tension to a predetermined tension according to the detected bias force. This makes it possible to control the installation tension of the SMA wire 3, according to the mechanical errors including manufacturing and assembly errors of assembled components such as the lever member 2 and the biasing means, to be in a tension range where the SMA wire 3 is able to exhibit durability and operates properly in an expected high temperature environment. Thus, it is possible to obtain a driving device that is capable of moving a driven body in a stable manner by using an SMA wire 3.

As described above, since the installation tension is adjusted such that the installation tension is in balance with the bias force when the SMA wire is energized with a predetermined amount of power, the driving device obtained by assembling all the components is able to operate in a stable manner at any expected environment temperature.

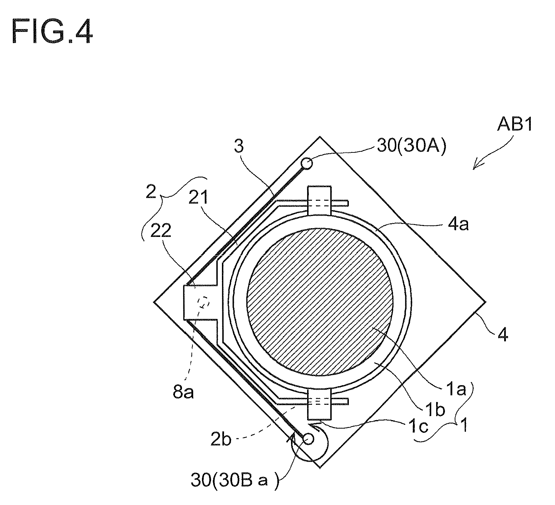

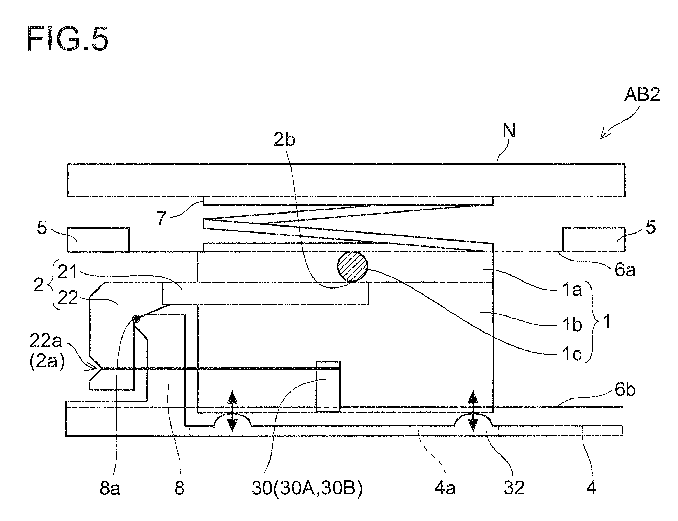

After the installation tension is predeterminedly set, the SMA wire 3 is fixed to the second holding portion 30B; there is no specific limitation to the method of fixing the SMA wire to the second holding portion 30B, and it may be done by, for example, swaging or pressure bonding. Furthermore, another possible method of setting the tension of the SMA wire 3 to a calculated predetermined installation tension in addition to the method in which the tension adjuster 31 is used is a method performed by using installation tension adjusting means provided in the driving mechanism and the driving device themselves. A description will now be given of such an example with reference to FIGS. 4 and 5.

A driving device AB1 illustrated in FIG. 4 is an example having driving mechanism provided with the installation tension adjusting means. The driving device AB1 is provided with a second holding portion 30Ba as the installation tension adjusting means. The second holding portion 30Ba makes it possible to adjust the tension of the SMA wire 3 and fix the SMA wire 3 simultaneously.

The second holding portion 30Ba is configured to rotate holding the SMA wire 3 to thereby adjust the tension of the SMA wire 3. After the tension is appropriately set, the second holding portion 30Ba is fixed by, for example, bonding so that it does not rotate any more. That is, the second holding portion 30Ba serves as an installation tension adjusting and holding portion which is fixed after a predetermined installation tension is applied to the SMA wire 3. With this configuration, it is possible to adjust the installation tension of the SMA wire 3 by using a member provided in the device not by using an externally provided tension adjuster.

A driving device AB2 illustrated in FIG. 5 is an example provided with initial stopping position controlling means 32 as the installation tension adjusting means. The initial stopping position controlling means 32 adjusts the installation tension of the SMA wire 3 by changing the initial stopping position of the driven body 1 (the lens unit 1). The initial stopping position controlling means 32 is configured to be able to adjust the stopping position of the lens unit 1 after one end and the other end of the SMA wire 3 are fixed to the first holding portion 30A and the second holding portion 30B, respectively.

As the initial stopping position controlling means 32, a height adjusting screw may be used, for example. However, there is no specific limitation to the configuration of the initial stopping position controlling means 32, and the initial stopping position controlling means 32 may also be configured by bonding a plurality of members (like clearance gauges) having different thicknesses, for example.

It is possible to move up and down the driven body 1 after fixing the SMA wire 3 to a predetermined initial tension, to thereby finely adjust the tension level. That is, it is possible to adjust and set the installation tension of the SMA wire 3.

As described above, with the above-described configuration in which the initial stopping position controlling means is provided to control the initial stopping position of the driven body such that the driven body is disposed by the initial stopping position controlling means at a position where a predetermined installation tension is applied to the SMA wire, it is possible to achieve a driving mechanism and a driving device that are capable of finely adjusting the installation tension of the SMA wire to set it to an appropriate tension by moving the initial stopping position of the driven body by the initial stopping position controlling means even when the driven body, the SMA wire, the lever member, the biasing means, and the like are assembled together and fixed, and this is preferable.

The tension to which the installation tension is adjusted in advance as described above is preferably a tension that is in balance with the bias force in a predetermined high temperature environment and under which the driven body (the lens unit 1) does not move until a predetermined temperature which is set in advance is reached. With this configuration, a high ambient temperature does not trigger an operation, and a desired predetermined operation is able to be performed accurately.

Furthermore, the predetermined temperature mentioned above is preferably in a range from 60°C to 80°C. This is because this temperature range is the one that is expected for recent mobile apparatuses such as camera-equipped mobile phones which are formed with a package of a large number of electronic parts and provided with a lens driving device. With this configuration, even though having a large number of electronic parts packaged in a small casing, even when the electronic parts are energized to generate heat to raise the temperature inside the casing, no operation is unexpectedly triggered until the internal temperature of the SMA wire reaches a previously expected temperature (in a range from 60°C to 80°C), it is possible to reduce malfunction in a state where the SMA wire is not energized.

That is, as already described above, the installation tension of the SMA wire is adjusted such that the installation tension is in balance with the bias force under not only a condition where the SMA wire is able to be used in a stress range of 500 MPa or less but also a condition where the SMA wire does not move the driven body even if the environment temperature rises to a range from 60°C to 80°C when the SMA wire is not energized. The value of the tension under such conditions is figured out in advance at a time of manufacturing the driving device, and adjustment is performed to achieve the conditions.

Next, with reference to FIGS. 1, 2A, and 2B, a description will be given of a method of manufacturing a driving device according to the present invention.

The method of manufacturing a driving device according to the present invention is a method of manufacturing a driving device provided with a stationary support member, a driven body 1 which is supported to be movable relatively with respect to the support member, a shape memory alloy (an SMA wire 3) which generates a force for moving the driven body 1, and biasing means (for example, a bias spring 7) which applies a bias force to the driven body 1 in a direction opposite to a direction in which the driven body 1 is moved by the shape memory alloy. Here, after the support member, the driven body 1, the shape memory alloy, and the biasing means are assembled together, the installation tension of the shape memory alloy is adjusted such that the installation tension is in balance with the bias force when the shape memory alloy is energized with a predetermined amount of power.

Furthermore, in the method of manufacturing a driving device according to the present invention, after the driven body 1, the shape memory alloy (the SMA wire 3), the biasing means (for example, the bias spring 7), and the like are assembled together, a load and a displacement amount in moving the driven body 1 against the biasing means to a predetermined position are measured, the bias force that the biasing means exhibits is detected from a relationship between the measured load and the measured displacement amount, and the installation tension of the shape memory alloy is adjusted to a predetermined tension according to a detection result of the bias force.

For example, the driving device is assembled with one end of the SMA wire 3 firmly fixed and the other end thereof temporarily fixed, and then the driven body is moved by using a loadcell 40 to measure a relationship between the load and the displacement amount (load data) at that time. Thereafter, the thus obtained load data is compared with ideal load data measured in advance, whereby it is possible to obtain an initial tension, that is, an installation tension, of the SMA wire 3 which allows a desired driving force to be exhibited in an expected high temperature environment.

In this way, with respect to each individual product, the installation tension of the SMA wire 3 is suitably set according to the bias force that is actually exhibited by the biasing means incorporated in each individual product, and thus, it is possible to control the installation tension of the SMA wire 3 to be in a tension range where the SMA wire 3 exhibits durability and operates properly even in an expected high temperature environment, and thus, with this method, it is possible to surely manufacture a driving device that is capable of stably moving a driven body by using a shape memory alloy (an SMA wire 3).

Furthermore, in manufacturing a driving device that is provided with a lever member 2 in addition to the driven body 1, the shape memory alloy, and the biasing means, the bias force that the biasing means actually exhibits is measured after the driven body 1, the shape memory alloy, and the lever member 2 are assembled together, and thus, it is possible to control the installation tension of the shape memory alloy to be in a tension range where the shape memory alloy exhibits durability and operates properly even in an expected high temperature environment. Thus, with this method, it is possible to surely produce a driving device that is capable of stably moving a driven body by using a shape memory alloy and a lever member 2.

Here, if the shape memory alloy is an SMA wire 3, it is preferable that the SMA wire 3 be fixed after the installation tension thereof is adjusted in a state where the SMA wire 3 is energized via first and second holding portions 30A and 30B by which both ends of the SMA wire 3 are respectively held. With this configuration, since the installation tension of the SMA wire 3 is adjusted, with the temperature of the SMA wire 3 maintained at a predetermined temperature, it is possible to produce a driving device that is capable of operating properly according to an expected environment temperature.

Furthermore, a manufacturing method is preferable in which the bias force is detected by using bias force detecting means and a predetermined installation tension is obtained from measured load data, and with one end of the SMA wire 3 fixed to the first holding portion 30A, the installation tension of the SMA wire 3 is set to the predetermined installation tension via a tension adjuster 31 which makes the SMA wire 3 tense while keeping the SMA wire 3 in contact with the second holding portion 30B. With such a manufacturing method, it is possible to finely adjust the installation tension while applying a predetermined amount of current across the first and second holding portions, and this facilitates manufacturing of a driving device that is capable of moving the driven body 1 stably in a predetermined temperature range.

As described above, since the present invention adjusts the tension of the SMA wire 3 while detecting mechanical errors such as errors of the lever member and the bias force, it is possible to maintain the tension of the SMA wire 3 to an optimal tension in each individual device. In contrast to conventional cases where the tension of the SMA wire 3 is fixedly set to a certain tension value, this feature of the present invention helps avoid inconveniently low durability of the SMA wire 3 and inconveniently unstable operation in a high temperature environment, and thus makes it possible to provide a driving mechanism and a driving device where durability is ensured and operations are able to be stably performed even in a high temperature environment.

This requires a tension adjuster, and an external apparatus may be used as the tension adjuster, or rotation of the wire holding portions provided inside the device may be utilized, and thus, it is possible to use a conventional configuration as it is. Furthermore, as to means for detecting an error of the lever member 2 and an error of the bias force, it is able to grasp both an error of the lever member 2 and an error of the bias force merely by measuring the load of the driven body 1, and thus is very simple. Thus, the driving mechanism and the driving device according to the present invention are able to be achieved without any great change in the configuration and without too much cost, but still highly effective.

As described hereinabove, with the driving mechanism according to the present invention, it is possible to control the installation tension of a shape memory alloy to be in a tension range where the shape memory alloy exhibits durability and operates properly in a high temperature environment, and thus the driving mechanism is capable of stably moving a driven body by using a shape memory alloy.

Furthermore, with the driving mechanism according to the present invention, it is possible to control the installation tension of a shape memory alloy, according to manufacturing and assembly errors of the lever member, the biasing means, and the like which are assembled together, to be in a tension range where the shape memory alloy exhibits durability and operates properly even in a high temperature environment. This makes it possible to obtain a driving device that is capable of stably moving a driven body by using a shape memory alloy.

Moreover, with the method of manufacturing a driving device according to the present invention, it is possible to control the installation tension of a shape memory alloy (an SMA wire) to be in a tension range where the shape memory alloy exhibits durability and operates properly even in a high temperature environment, from load data indicating relationship between the load and the displacement amount in moving an assembled driven body. Thus, with this method, it is possible to surely produce a driving device that is capable of stably moving a driven body by using a shape memory alloy.

### Industrial Applicability

The driving mechanism, the driving device, and the method of manufacturing a driving device according to the present invention are preferably applicable to a driving mechanism for a lens unit of a compact imaging device where a large number of electronic parts packaged and thus temperature may rise high, a driving device provided with the driving mechanism, and a method of manufacturing the driving device, respectively.

### List of Reference Symbols

- 1: driven body (lens unit)
- 2: lever member
- 3: SMA wire (shape memory alloy)
- 4: base member (stationary portion)
- 7: bias spring (biasing means)
- 30A: first holding portion
- 30B: second holding portion
- 30Ba: second holding portion (installation tension adjusting means)
- 31: tension adjuster
- 32: initial stopping position controlling means (installation tension adjusting means)
- AA1, AB1, AB2: driving device
- AX: optical axis (axis line)

## Claims

1. A driving mechanism, comprising:
a stationary support member;
a driven body which is supported to be movable relatively with respect to the support member;
a shape memory alloy which generates a force for moving the driven body; and
biasing means which applies a bias force to the driven body in a direction opposite to a direction in which the driven body is moved by the shape memory alloy,
wherein
an installation tension of the shape memory alloy is adjusted in advance such that the installation tension is in balance with the bias force when the shape memory alloy is energized with a predetermined amount of power.

2. A driving mechanism, comprising:
a stationary support member;
a driven body which is supported to be movable relatively with respect to the support member;
a shape memory alloy which generates a force for moving the driven body;
a lever member which moves the driven body by receiving the force generated by the shape memory alloy; and
biasing means which applies a bias force to the driven body in a direction opposite to a direction in which the driven body is moved by the shape memory alloy,
wherein
an installation tension of the shape memory alloy is adjusted in advance such that, when the shape memory alloy is energized with a predetermined amount of power, the installation tension is in balance with the bias force, the bias force being a predetermined bias force including driving resistance of the lever member.

3. The driving mechanism of claim 1 or 2,
wherein
the installation tension is a tension under which the driven body does not move until a predetermined temperature which is set in advance is reached.

4. The driving mechanism of claim 3,
wherein
the predetermined temperature is in a range from 60°C to 80°C.

5. The driving mechanism of any one of claims 1 to 4, further comprising installation tension adjusting means which adjusts the installation tension of the shape memory alloy.

6. The driving mechanism of any one of claims 1 to 5,
wherein
the driven body is a lens unit;
the driven body moves in an optical axis direction; and
the shape memory alloy is a shape memory alloy wire.

7. A driving device, comprising:
a lens unit as a driven body; and
the driving mechanism of any one of claims 1 to 6 as a driving mechanism for moving the lens unit in a direction of an optical axis of the lens unit.

8. A driving device, comprising:
a stationary portion provided with a base member having a through hole;
a driven body which is supported, via a support member which is attached to the base member, to be able to reciprocate inside the through hole in a direction of an axis line of the through hole;
a shape memory alloy wire which applies to the driven body a driving force for moving the driven body;
a lever member around which the shape memory alloy wire is wound and which moves the driven body by receiving the driving force from the shape memory alloy wire; and
biasing means which applies a bias force to the driven body in a direction opposite to a direction in which the driven body is moved by the shape memory alloy wire,
wherein
both ends of the shape memory alloy wire are respectively held by energizing holding portions through which the shape memory alloy wire is able to be energized, a predetermined installation tension being applied to the shape memory alloy wire; and
the installation tension is adjusted in advance such that the installation tension is in balance with driving resistance of the lever member and a bias force that the biasing means exhibits when the shape memory alloy wire is energized with a predetermined amount of power.

9. A method of manufacturing a driving device including a stationary support member, a driven body which is supported to be movable relatively with respect to the support member, a shape memory alloy which generates a force for moving the driven body, and biasing means which applies a bias force to the driven body in a direction opposite to a direction in which the driven body is moved by the shape memory alloy,
wherein,
after the support member, the driven body, the shape memory alloy, and the biasing means are assembled together, an installation tension of the shape memory alloy is adjusted such that the installation tension is in balance with the bias force when the shape memory alloy is energized with a predetermined amount of power.

10. A method of manufacturing a driving device including a stationary support member, a driven body which is supported to be movable relatively with respect to the support member, a shape memory alloy which generates a force for moving the driven body, and biasing means which applies a bias force to the driven body in a direction opposite to a direction in which the driven body is moved by the shape memory alloy,
wherein,
after the support member, the driven body, the shape memory alloy, and the biasing means are assembled together, a load and a displacement amount in moving the driven body against the biasing means to a predetermined position are measured, the bias force that the biasing means exhibits is detected from a relationship between the load and the displacement amount which are measured, and installation tension of the shape memory alloy is adjusted to a predetermined tension according to said detected bias force.

11. The method of manufacturing a driving device of claim 10,
wherein
the shape memory alloy is a shape memory alloy wire; and,
the shape memory alloy wire is fixed after the installation tension is adjusted to the predetermined installation tension with the shape memory alloy wire energized via an energizing first holding portion and an energizing second holding portion by which two ends of the shape memory alloy wire are respectively held.

12. The method of manufacturing a driving device of claim 11,
wherein
an amount of power with which the shape memory alloy wire is energized in adjusting the installation tension is an amount of power with which the shape memory alloy wire generates a tension that is equivalent to a tension that the shape memory alloy wire has when temperature of the shape memory alloy wire is a predetermined temperature.

13. The method of manufacturing a driving device of claim 11 or 12,
wherein
the shape memory alloy wire is fixed after the installation tension is adjusted to the predetermined installation tension by moving the second holding portion in a state in which a first end of the shape memory alloy wire is fixed to the first holding portion, a second end of the shape memory alloy wire is held by the second holding portion, and the shape memory alloy wire is energized.
